# EUROPEAN PATENT APPLICATION

(11) **EP 4 122 329 A1**
(43) Date of publication of application: **25.01.2023**
(21) Application number: 21770417.0
(22) Date of filing: 03.02.2021
(51) Int. Cl.: A23L 15/00, A21D 13/06

(54) **COMPOSITION AND USE THEREOF AS AN EGG SUBSTITUTE IN BAKING AND CONFECTIONERY PRODUCTS, KIT AND FOOD PRODUCT**

(30) Priority: 19.03.2020 BR 102020005530
(71) Applicant: Mantiqueira Alimentos Ltda., 37464-000 Itanhandu (BR)
(72) Inventor: PINTO, Amanda, 22640-102 Rio de Janeiro (BR)
(74) Representative: Clarke Modet & Co.
(86) International application number: PCT/BR2021/050048
(87) International publication number: WO 2021/184093

(57) **Abstract**

The present invention consists of a composition comprising ingredients of vegetable origin and chemical yeasts, in powder form, and their use to replace eggs *in natura* in the preparation of bakery and confectionery products.

Said ingredients are ground whole golden flaxseed, pea protein, pea starch, calcium diphosphate, monocalcium phosphate and sodium bicarbonate.

## Description

### Field of the Invention:

This invention relates to the field of vegan compositions, more specifically in the field of compositions for egg substitutes.

The invention is characterized by being a mixture in powder form, comprising chemical yeasts and ingredients of vegetable origin to replace eggs in bakery and confectionery products. Said food product is free of eggs *in natura,* gluten and allergens, being a vegan product.

### Background of the invention:

Currently, a large number of consumers have abandoned the practice of consuming foods of animal origin and adopted a diet restricted to vegetables. The reasons for this range from concern about the environmental impact of agriculture, protection of animal rights and the possibility of allergic reaction and/or intolerance to specific components of products of animal origin.

Eggs are an example of a product of animal origin used on a large scale both in the food industry and domestically for the preparation of bakery and confectionery products. The egg has multifunctional properties that are essential in these preparations, such as the ability to emulsify, foam, thicken and coagulate, which give the product adequate color, texture and flavor.

However, the demand for products capable of replacing eggs *in natura* or pasteurized eggs in bakery and confectionery products has grown along with the popularization of the vegan lifestyle, in addition to serving the portion of the population that is allergic to some of the egg components or look for products with reduced cholesterol content.

Faced with the growing need to replace eggs in bakery and confectionery products, the present invention is presented as a powdered composition comprising ground whole golden flaxseed, pea protein, pea starch, calcium diphosphate, monocalcium phosphate and sodium bicarbonate.

Said composition was designed so that people who are intolerant to egg components, allergic or who do not want to consume eggs can carry out all their recipes, obtaining foods with the same appearance, texture, and flavor.

Formulations that seek to replace eggs are widely known in the state of the art. However, none of them has the technical features necessary to replace eggs from a completely vegan composition, without additives, without the use of transgenics, and without the presence of allergens.

Document WO2014107687 discloses a multifunctional composition for use as an egg substitute in bakery products. The composition comprises animal or vegetable protein and a plant seed or fraction thereof that provides functional properties. The present invention, however, always uses peas as a source of vegetable protein, that is, there is no possibility of using animal protein, as it is a totally vegan product.

Patent application WO2013067453 discloses compositions for use in replacing eggs, including in food compositions such as emulsions and bakery products. The composition comprises protein in an amount of up to 80% by dry weight, lipid in an amount of 5 to 15% by dry weight, and may further comprise flours in 50% and/or starches in an amount of less than 20% by dry weight. Yellow pea protein is among the plant proteins of WO2013067453, as well as modified starch and gums. On the contrary, the present invention does not have modified starch, which, due to the chemical modification of the granule, provides structure to the final product and resistance to temperature and/or shear processes. Starch can also contribute to the texture and softness of the final product. The present invention also does not have gums, which can bring viscosity, structural and sensory properties of softness and texture. Also, depending on the flour used, the product may contain gluten.

Document WO2019220431 also discloses an egg replacement composition. The composition contains from 25 to 80% by weight of protein, from 5 to 50% by weight of flour from the *Fabaceae* family (legumes) and from 5 to 60% by weight of polysaccharides. The proteins that can be used are soy, potato, chickpeas, mung beans and peas, and the composition also has other components such as gums, dyes, salts and others. In the present invention, soy is not used as a protein source, as it can be considered an allergen. Soy works as an emulsifying ingredient. It is much more challenging, from a technical point of view, to achieve the same emulsifying property using pea and flaxseed sources. The present invention also does not use gums that function as structural agents, contributing with texture, viscosity and softness.

Some powder products for egg replacement in bakery recipes can also be found in the state of the art. Among them, the commercial product Vegan Egg Pro, which refers to a powdered composition for bakery and confectionery doughs. The composition presents powdered golden flaxseed, in addition to isolated brown rice protein and powdered chickpeas. Unlike the present invention, the composition of the Vegan Egg Pro product comprises rice protein, not pea. In addition, the present invention uses pea starch, ensuring softness and moisture to the final product, and pea protein of a high degree of purity (approximately 85% protein), which allowed to provide recipes without grit texture and with a taste closer to the usual product, when compared to the same recipes made with other vegetable proteins.

The invention also contains chemical yeasts in its composition that guarantee the expansion of some products, not containing gluten or soy and being totally vegan. Another well-known product is Bob's Red Mill Egg Replacer, which has ingredients such as potato starch, tapioca flour, sodium bicarbonate and psyllium in its composition. It was possible to observe that the use of potato starch and tapioca flour brought an elastic texture, causing the recipes to grow less. Compared to potato starch and tapioca flour, the use of pea starch and protein made the recipes less elastic and lighter, allowing for greater dough expansion.

Atlantic Natural Foods' product Neat Egg also consists of a powdered egg replacement composition, with ingredients such as chia seeds and chickpea flour. The use of chickpea flour does not confer the organoleptic properties such as those achieved with the use of high purity pea starch and protein (approximately 85% protein), since these are isolated components and result in a final product with less rudimentary flavor and texture.

Follow Your Heart's egg replacement product, Vegan Egg, is characterized as a powdered product for general recipes, omelet and scrambled eggs. Its composition presents organic powdered soy milk, modified cellulose, gellan gum, calcium lactate of vegetable origin, carrageenan, natural flavors (black salt and herbs), yeast (nutritional yeast) and beta-carotene dye. It is distinguished by having seasonings, gums, modified cellulose and yeast, which would not be useful for use in different recipes. On the other hand, the composition of the present invention is presented as an egg substitute with neutral flavor for both sweet and salty recipes, without the need for dyes and/or seasonings, in addition to not making use of gums, which offer greater structure and flexibility to the final product, thus overcoming a technological challenge. In this way, the present composition, even free from gums, solves the technical problem in a simpler and more efficient way.

Similarly, Orgran has a powdered product for general recipes, scrambled eggs and omelets: the Vegan Easy Egg. The ingredients of the composition are chickpea flour, corn flour, stabilizing vegetable gums (methyl cellulose and carrageenan), vegetable protein, corn dextrose, salt, curcuma, calcium carbonate growth agent and powdered garlic. It is distinguished by having seasonings, gums, modified cellulose and yeast, which would not be useful for use in recipes, since it would not have the necessary neutrality for greater diversity of use, as in sweet and salty recipes, without the need for dyes and/or seasonings, in addition to not using gums, which offer greater structure and flexibility to the final product, thus overcoming a technological challenge. In this way, the present composition, even free from gums, solves the technical problem in a simpler and more efficient way.

Thus, based on the universe of documents and products of the state of the art, it is clear that the present invention stands out as an alternative to powdered products to replace eggs in bakery and confectionery recipes.

It is also observed that the teachings do not suggest or anticipate the present invention in an isolated or combined way, characterizing it as a technical solution with an effect superior to the state of the art for the replacement of eggs in the elaboration of bakery and confectionery recipes.

### Brief description of the invention:

The present invention consists of a composition comprising ingredients of vegetable origin and chemical yeasts, in powder form, which provides multifunctional properties similar to egg *in natura* in recipes for bakery and confectionery products.

Said ingredients are ground whole golden flaxseed, pea protein, pea starch, calcium diphosphate, monocalcium phosphate and sodium bicarbonate.

The composition consists of mixing said ingredients in powder form, being an alternative to the use of eggs in the preparation of cakes, breads, pancakes, pies, and other preparations. To this end, 11 g of the composition in powder form must be added to 39 g of water, in order to replace the equivalent of a 50 g large egg *in natura* in a recipe.

The preparation of the desired recipe takes place in the usual way, with the mixture of ingredients to prepare the dough. The composition for replacing eggs is added together with the water and the other ingredients of the recipe, generating the dough of the product, which can be processed normally afterwards, such as, for example, baked.

The present invention also stands out for offering simplicity in the pre-preparation, with no need to break the eggs, separate the yolk from the white, form snow whites and other processes normally necessary when using eggs *in natura* in sweet and salty recipes. The powdery nature of the composition also makes it less microbiologically sensitive, extending its shelf life and making handling and storage simpler.

The composition described above is presented in the form of a kit, which further comprises a meter and instructions for use.

### Brief description of figures:

For a better description of the effect of the composition and its result in the incorporation in recipes of bakery and confectionery products, the figures listed below are presented:
Figure 1 shows cross-sections of two simple white cake preparations. On the left, the standard cake, prepared with eggs *in natura.* On the right, the test cake obtained by replacing the eggs *in natura* with the composition of the present invention.
Figure 2 shows cross-sections of two simple chocolate cake preparations. On the left, the standard cake, prepared with eggs *in natura.* On the right, the test cake obtained by replacing the eggs *in natura* with the composition of the present invention.
Figure 3 shows two pancake preparations. On the left, the standard pancake, prepared with eggs *in natura.* On the right, the test pancake obtained by replacing the eggs *in natura* with the composition of the present invention.
Figure 4 shows different sections of two preparations of salted blender pie without filling. On the left, the standard pie, prepared with eggs *in natura.* On the right, the test cake obtained by replacing the eggs *in natura* with the composition of the present invention.
Figure 5 shows two preparations of pie filled with palm heart, olives and peas. On the left, the standard pie, prepared with eggs *in natura.* On the right, the test cake obtained by replacing the eggs *in natura* with the composition of the present invention.

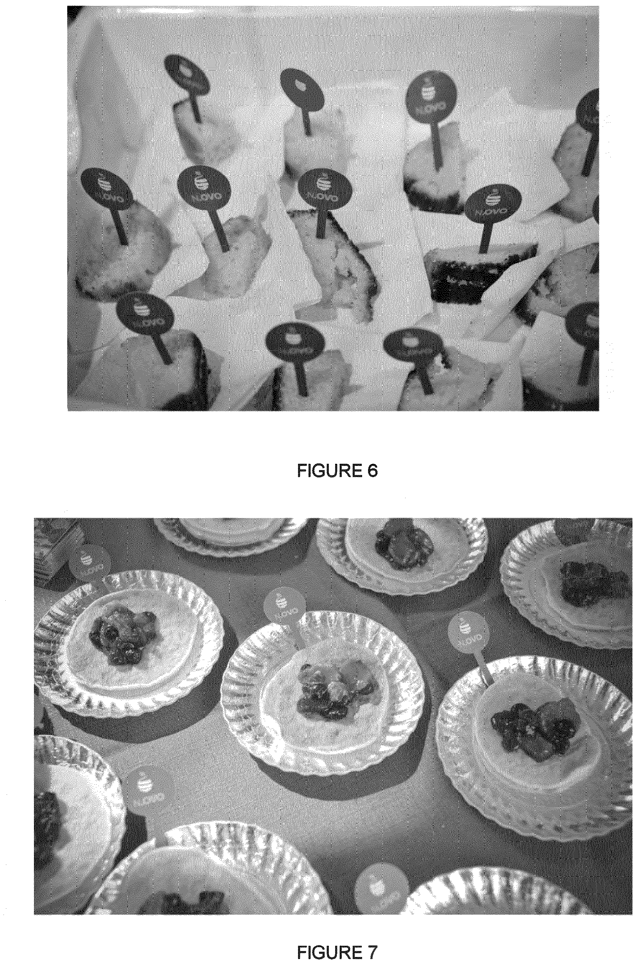

Figure 6 shows the slices of simple white cake prepared with the composition of the present invention, used to carry out the blind sensory tests.
Figure 7 shows the pancakes prepared with the composition of the present invention, used to carry out the blind sensory tests.

### Detailed description of the invention:

The present invention describes a composition in powder form and its use for replacing eggs in bakery and confectionery products. Said composition comprises ground whole golden flaxseed, pea protein, pea starch, calcium diphosphate, monocalcium phosphate and sodium bicarbonate.

The proportion of ingredients in the composition was designed to mimic the functional properties of eggs *in natura* in bakery and confectionery products, such as, for example, reproducing their emulsification, foaming, thickening, and coagulation properties, among others.

The composition of the present invention comprises, more specifically, from 30 to 40% on a dry basis of pea starch, from 10 to 20% on a dry basis of ground whole golden flaxseed, from 10 to 20% on a dry basis of pea protein, from 10 to 20% on a dry basis of Leval (calcium diphosphate and monocalcium phosphate) and from 10 to 20% on a dry basis of sodium bicarbonate.

In a preferred embodiment, the ingredients of the composition of the present invention and their proportions are as seen in the table below:

**Table 1**

| Ingredients | | Dry base |
|---|---|---|
| Water | 78 g | % |
| Pea starch | 8.5 g | 38.6 |
| Ground whole golden flaxseed | 4g | 18.2 |
| Pea protein | 3.5 g | 15.9 |
| Leval (calcium diphosphate and monocalcium phosphate) | 3.5 g | 15.9 |
| Sodium bicarbonate | 2.5 g | 11.4 |

The resulting composition proves to be effective in replacing eggs *in natura* in bakery and confectionery recipes, successfully mimicking the properties of eggs in these recipes.

To this end, 11 g of the composition in powder form must be added to 39 g of water in order to replace the equivalent of a 50 g large egg *in natura* in a recipe.

### Examples:

Once the recipe products were obtained, blind sensory tests were performed with 120 consumers. Of this total, 115 people preferred the test recipe, obtained with the composition of the present invention, and 5 people preferred the product of the standard recipe, with the use of eggs *in natura.*

The results reproduced in Table 2 demonstrate a significant preference of 95.8% of consumers for the recipe made with the present invention against only 4.2% preferring the standard recipe with eggs *in natura.* Therefore, it is clear from such a result that the present invention solves the technical problem of providing a vegan, gluten-free and allergen-free product that replaces egg *in natura* in bakery and confectionery recipes.

**Table 2**

| Sample | X | N | P-Value |
|---|---|---|---|
| Test | 115 | 120 | 0.958333 |
| Default | 5 | 120 | 0.041667 |

Difference = p(test)-p(default); difference estimate = 0.916667; 95% confidence interval for difference: (0.866105, 0.967229); test for difference = 0 (vs ≠ 0): Z = 35.53, P-Value = 0.000.

The following are examples of embodiments of the present invention, that is, the incorporation of the powdered composition in recipes for bakery and confectionery products, replacing eggs *in natura* in their preparation.

### Example 1

Two simple white cake preparations were carried out. The standard cake corresponds to the conventional recipe, with the incorporation of egg *in natura.* The test cake, in turn, corresponds to the recipe with the replacement of eggs by the powdered composition of the present invention. The proportion of ingredients used in both cases is described in Table 3 below:

**Table 3**

| Ingredients | Standard | Test |
|---|---|---|
| Wheat flour | 160 g | 160 g |
| Refined sugar | 120 g | 120 g |
| Egg | 100 g | - |
| Powdered composition | - | 22 g |
| Water | 100 g | 100 g |
| Additional water | - | 78 g |
| Sunflower oil | 60 g | 60 g |
| Powdered yeast | 15 g | 15 |

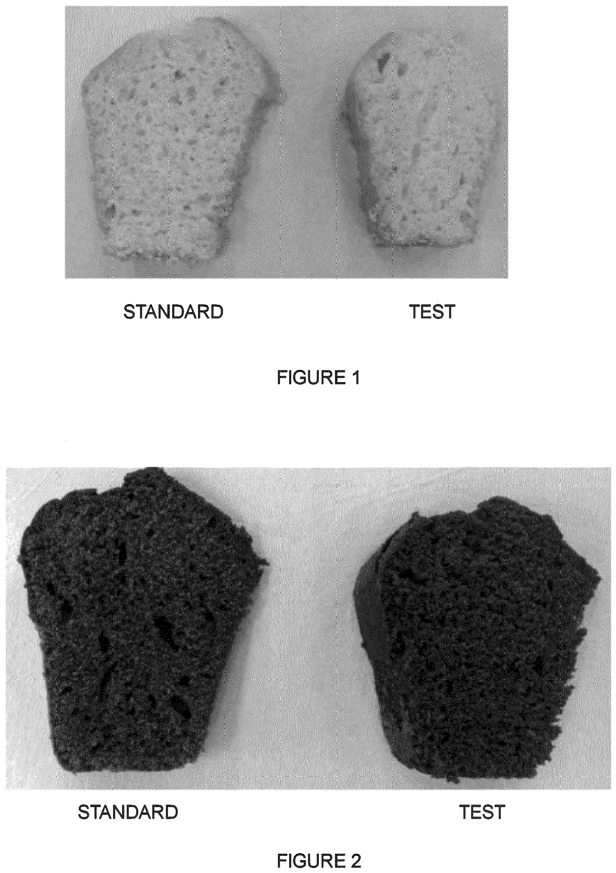

The two preparations were submitted to the same preparation conditions, mixing all the ingredients and baking in a preheated oven at 180 °C for approximately 40 minutes. The powdered composition was introduced by mixing 22 g of the composition with 78 g of water, offering greater practicality in the preparation because there is no breaking of the eggs or the formation of snow whites. The final result and the comparison between the two preparations can be seen in Figure 1.

It can be concluded that the simple white cake obtained with the powdered composition of the present invention meets the expected parameters of appearance, texture and taste of a standard recipe. In a blind test performed, most consumers preferred the test recipe (with the powdered composition) over the standard recipe, which demonstrates that the egg replacement composition was highly accepted and efficiently mimicked the functional and sensory properties of eggs *in natura.*

### Example 2

Two simple chocolate cake preparations were carried out. The standard cake corresponds to the conventional recipe, with the incorporation of egg *in natura.* The test cake, in turn, corresponds to the recipe with the replacement of eggs by the powdered composition of the present invention. The proportion of ingredients used in both cases is described in Table 4 below:

**Table 4**

| Ingredients | Standard | Test |
|---|---|---|
| Wheat flour | 160 g | 160 g |
| Refined sugar | 120 g | 120 g |
| Egg | 100 g | - |
| Powdered composition | - | 22 g |
| Water | 100 g | 100 g |
| Additional water | - | 78 g |
| Sunflower oil | 60 g | 60 g |
| Powdered yeast | 15 g | 15 |

The two preparations were submitted to the same preparation conditions, mixing all the ingredients and baking in a preheated oven at 180 °C. The powdered composition was introduced by mixing 22 g of the composition with 78 g of water, offering greater practicality in the preparation because there is no breaking of the eggs or the formation of snow whites. The final result and the comparison between the two preparations can be seen in Figure 2.

It is possible to conclude that the simple chocolate cake obtained with the powdered composition of the present invention meets the expected parameters of appearance, texture and taste of a standard recipe. In a blind test performed, most consumers preferred the test recipe (with the powdered composition) over the standard recipe, which demonstrates that the egg replacement composition was highly accepted and efficiently mimicked the functional and sensory properties of eggs *in natura.*

### Example 3

Two pancake preparations were performed. The standard pancake corresponds to the conventional recipe, with the incorporation of egg *in natura.* The test pancake, in turn, corresponds to the recipe with the replacement of eggs by the powdered composition of the present invention. The proportion of ingredients used in both cases is described in Table 5 below:

**Table 5**

| Ingredients | Standard | Test |
|---|---|---|
| Wheat flour | 120 g | 120 g |
| Milk | 240 g | 240 g |
| Egg | 100 g | - |
| Powdered composition | - | 22 g |
| Additional water | - | 78 g |
| Salt | 2 g | 2 g |

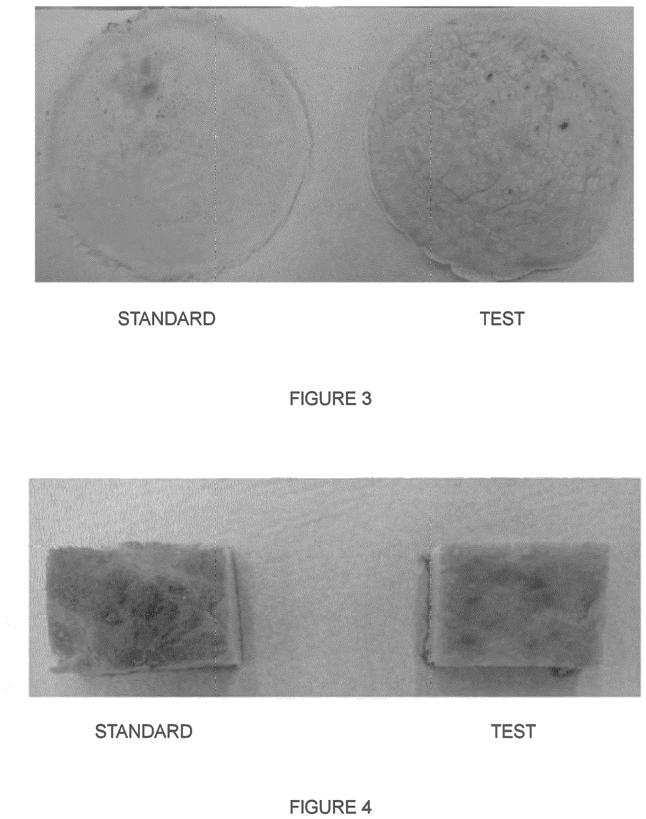

The two preparations were submitted to the same preparation conditions, with mixing of all ingredients followed by heating on a flat surface heated on medium heat for 3 minutes on each side of the pancake. The introduction of the powdered composition took place by mixing 22 g of the composition with 78 g of water, offering greater practicality in the preparation because there is no breakage of the eggs and the storage is more practical. The final result and the comparison between the two preparations can be seen in Figure 3.

It is possible to conclude that the pancake obtained with the powdered composition of the present invention meets the expected parameters of appearance, texture and taste of a standard recipe. In a blind test performed, most consumers preferred the test recipe (with the powdered composition) over the standard recipe, which demonstrates that the egg replacement composition was highly accepted and efficiently mimicked the functional and sensory properties of eggs *in natura.*

### Example 4

Two preparations of blender salt pie without filling were carried out. The standard pie corresponds to the conventional recipe, with the incorporation of egg *in natura.* The test cake, in turn, corresponds to the recipe with the replacement of eggs by the powdered composition of the present invention. The proportion of ingredients used in both cases is described in Table 6 below:

**Table 6**

| Ingredients | Standard | Test |
|---|---|---|
| Milk | 370 g | 370 g |
| Wheat flour | 130 g | 130 g |
| Egg | 100 g | - |
| Powdered composition | - | 22 g |
| Additional water | - | 78 g |
| Sunflower oil | 100 g | 100 g |
| Powdered yeast | 15 g | 15 g |
| Salt | 2 g | 2 g |

The two preparations were submitted to the same preparation conditions, mixing all the ingredients and baking in a preheated oven at 180 °C. The introduction of the powdered composition took place by mixing 22 g of the composition with 78 g of water, offering greater practicality in the preparation because there is no breakage of the eggs and the storage is more practical. The final result and the comparison between the two preparations can be seen in Figure 4.

It is possible to conclude that the pie without filling obtained with the powdered composition of the present invention meets the expected parameters of appearance, texture and flavor of a standard recipe. In a blind test performed, most consumers preferred the test recipe (with the powdered composition) over the standard recipe, which demonstrates that the egg replacement composition was highly accepted and efficiently mimicked the functional and sensory properties of eggs *in natura.*

### Example 5

Two preparations of pie filled with palm heart, olives and peas were made. The standard pie corresponds to the conventional recipe, with the incorporation of egg *in natura.* The test cake, in turn, corresponds to the recipe with the replacement of eggs by the powdered composition of the present invention. The proportion of ingredients used in the preparation of the dough in both cases is described in Table 4 above, with only incorporating the filling of palm heart, olives and peas.

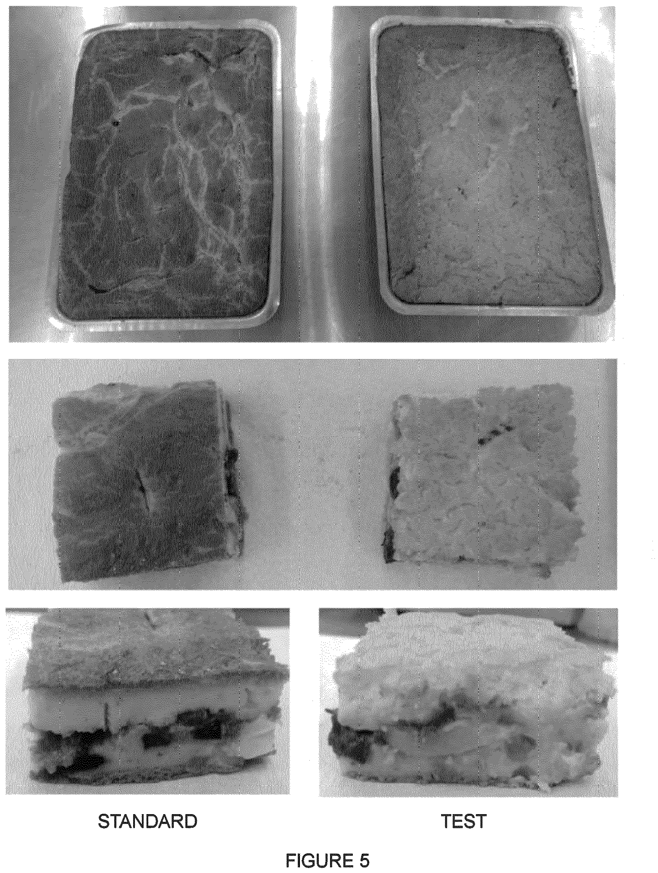

The two preparations were submitted to the same preparation conditions, mixing all the ingredients and baking in a preheated oven at 180 °C. The introduction of the powdered composition took place by mixing 22 g of the composition with 78 g of water, offering greater practicality in the preparation because there is no breakage of the eggs and the storage is more practical. The final result and the comparison between the two preparations can be seen in Figure 5.

It is possible to conclude that the pie with palm heart, olives and pea filling obtained with the powdered composition of the present invention meets the expected parameters of appearance, texture and flavor of a standard recipe. In a blind test performed, most consumers preferred the test recipe (with the powdered composition) over the standard recipe, which demonstrates that the egg replacement composition was highly accepted and efficiently mimicked the functional and sensory properties of eggs *in natura.*

While the invention has been described in conjunction with specific examples of recipes, it is apparent that many alternatives, modifications and variations will be apparent to those skilled in the art. Consequently, it is intended to encompass all such alternatives, modifications and variations that fall within the scope of the appended claims. It should be understood that various alternatives to the embodiments of the invention described herein may be employed in the practice of the invention.

## Claims

1. A composition, **characterized in that** it comprises from 30 to 40% on a dry basis of pea starch, from 10 to 20% on a dry basis of ground whole golden flaxseed, from 10 to 20% on a dry basis of pea protein, from 10 to 20% on a dry basis of calcium diphosphate and monocalcium phosphate and from 10 to 20% on a dry basis of sodium bicarbonate.

2. The composition according to claim 1, **characterized in that** it preferably comprises 38.6% on a dry basis of pea starch, 18.2% on a dry basis of ground whole golden flaxseed, 15.9% on a dry basis of pea protein, 15.9% on a dry basis of calcium diphosphate and monocalcium phosphate and 11.4% on a dry basis of sodium bicarbonate.

3. The composition according to claim 1, **characterized in that** said composition provides multifunctional properties similar to egg *in natura* in recipes.

4. The composition according to claim 1, **characterized in that** said composition is in the form of dry powder.

5. A use of the composition as defined in claim 1, **characterized in that** it is made in the replacement of eggs *in natura* in bakery and confectionery products.

6. The use according to claim 5, **characterized in that** the products are selected from the group consisting of cakes, breads, crepes, pancakes and pies.

7. The use according to claim 5 or 6, **characterized in that** it comprises mixing 11 g of the composition with 39 g of water to replace, in a recipe, 50 g of egg.

8. A kit, **characterized in that** it comprises the composition as defined in any one of claims 1 to 3, a meter and instructions for use.

9. A food product, **characterized in that** it is free of eggs *in natura*, gluten and allergens.

10. The food product according to claim 9, **characterized in that** it is a vegan product.

## Amended claims

### Amended claims under Art. 19.1 PCT

1. A composition, **characterized in that** it comprises from 30 to 40% on a dry basis of pea starch, from 10 to 20% on a dry basis of ground whole golden flaxseed, from 10 to 20% on a dry basis of pea protein, from 10 to 20% on a dry basis of calcium diphosphate and monocalcium phosphate and from 10 to 20% on a dry basis of sodium bicarbonate.

2. The composition according to claim 1, **characterized in that** it preferably comprises 38.6% on a dry basis of pea starch, 18.2% on a dry basis of ground whole golden flaxseed, 15.9% on a dry basis of pea protein, 15.9% on a dry basis of calcium diphosphate and monocalcium phosphate and 11.4% on a dry basis of sodium bicarbonate.

3. The composition according to claim 1, **characterized in that** said composition has the ability to emulsify, foam, thicken and coagulate similar to egg *in natura* in recipes.

4. The composition according to claim 1, **characterized in that** said composition is in the form of dry powder.

5. A use of the composition as defined in claim 1, **characterized in that** it is made in the preparation of substitutes to eggs *in natura* in bakery and confectionery products, wherein each substitute equivalent to a large egg *in natura* of 50 g comprises the mixture of 11 g of the composition in powder form, as defined in claim 1, with 39 g of water.

6. The use according to claim 5, **characterized in that** the products are selected from the group consisting of cakes, breads, crepes, pancakes and pies.

7. A kit, **characterized in that** it comprises the composition as defined in any one of claims 1 to 4, a meter and instructions for use.

8. A bakery and confectionery food product, **characterized in that** it comprises at least one egg substitute of a composition as defined in claims 1 to 4, and is free of eggs *in natura*, gluten and allergens.

9. The food product according to claim 8, **characterized in that** it is a vegan product.

Statement under Art. 19.1 PCT

Pursuant to Rule 46.4 of the PCT, the Applicant informs that the claims have been modified as follows:
   original claims 1, 2, 4, 6 and 10 remain unchanged;
   original claims 3, 5, 8 and 9 have been replaced by modified claims, retain numbering;
   claim 7 was cancelled;
